Europäisches Patentamt

European Patent Office

Office européen des brevets

(11) Veröffentlichungsnummer: **0 387 866**
**A2**

(12) **EUROPÄISCHE PATENTANMELDUNG**

(21) Anmeldenummer: **90104874.4**

(22) Anmeldetag: **15.03.90**

(51) Int. Cl.⁵: **G11B 11/10**

(30) Priorität: **16.03.89 DE 3908587**

(43) Veröffentlichungstag der Anmeldung:
**19.09.90 Patentblatt 90/38**

(84) Benannte Vertragsstaaten:
**CH DE FR GB IT LI**

(71) Anmelder: **FORSCHUNGSZENTRUM JÜLICH GMBH**
**Wilhelm-Johnen-Strasse**
**D-5170 Jülich(DE)**

(72) Erfinder: **Woike, Theo, Dr.**
**Dürener Strasse 290**
**D-5000 Köln 41(DE)**
Erfinder: **Kerkmann, Detlef**
**Brockmüllerstrasse 16**
**D-5170 Jülich(DE)**
Erfinder: **Beier, Thomas**
**Hospitalstrasse 34**
**D-5030 Hürth(DE)**
Erfinder: **Krasser, Wolfgang, Dr.**
**An der Lünette 4c**
**D-5170 Jülich(DE)**
Erfinder: **Pescia, Danilo, Dr.**
**Victor-Gollancz-Strasse 55**
**D-5170 Jülich(DE)**

(54) **Verfahren und Vorrichtung zum Auslesen magnetisch gespeicherter Informationen.**

(57) Die Erfindung betrifft ein Verfahren sowie eine Vorrichtung zum Auslesen magnetisch, insbesondere binär gespeicherter Informationen eines magnetooptischen oder optoelektronischen Speichermediums. Es ist dabei Aufgabe der Erfindung, ein Verfahren und eine Vorrichtung zu entwickeln, die einfach, kompakt und höchst empfindlich sind und insbesondere die Charakterisierung von Speicherschichten mit Schichtdicken bis zu Monolagen erlauben. Die erfindungsgemäße Aufgabe wird durch ein Verfahren gelöst, bei dem die in der zu der Reflexionsebene senkrecht gespeicherten Informationen des Speichermediums genutzt werden. Dabei wird das elektrische Signal des lichtelektrischen Detektors um einen festen Wert verringert und anschließend elektronisch geeignet verstärkt. Der Wert wird dabei so gewählt, daß die aufgrund der Variation des Magnetfeldes erreichte Schwankungen im elektrischen Signal erfaßt werden. Bei einer besonders vorteilhaften Variante des beanspruchten Verfahrens und der beanspruchten Vorrichtung wird ein Polarisator verwendet, der zwischen Speichermedium und Detektor vorgesehen ist. Dabei wird vom Polarisator im wesentlichen die Komponente des von dem Speichermedium kommenden Lichtstrahls absorbiert, die keinen Beitrag zur Bestimmung der in dem Speichermedium enthaltenen magnetischen Information liefert.

FIG. 1

# Verfahren und Vorrichtung zum Auslesen magnetisch gespeicherter Informationen

Die Erfindung betrifft ein Verfahren zum Auslesen magnetisch, insbesondere binär gespeicherter Informationen eines magnetooptischen oder optoelektronischen Speichermediums gemäß dem Oberbegriff des Anspruchs 1. Sie betrifft ferner eine Vorrichtung gemäß den Merkmalen des Oberbegriffs des Anspruchs 9 bzw. Anspruchs 11.

Technologisch spielen Schichtsysteme mit geeigneten magnetischen Eigenschaften, die als magnetische Speicher in der digitalen Informationstechnologie verwendet werden, aufgetragen auf einem nicht magnetischen Träger eine wichtige Rolle. Dabei werden typischerweise Schichten mit Dicken im Bereich von $1 \times 10^{-6}$ m eingesetzt, wenngleich aus J.G. Gay, R. Richter, J. Appl. Phys. 61, 3362 (1987) und F.J.A. den Broeder et al., Phys. Rev. Lett 60, 2769 (1988) auch dünnere Schichten bis in den Bereich von $1 \times 10^{-10}$ m bekannt sind.

Der Speicherprozeß bei solchen Schichtsystemen beruht darauf, daß das Speichermedium zwei verschiedene (im folgenden als "+1" und "-1" bezeichneten) magnetische Zustände annehmen kann. Dabei reicht zum Umschalten zwischen diesen beiden magnetischen Zuständen ein kleines von außen angelegtes Magnetfeld H bereits aus. Das sog. magnetische Gedächtnis des Speichermediums gestattet den angenommenen magnetischen Zustand beizubehalten, auch dann, wenn das angelegte Magnetfeld H entfernt wird.

Der magnetische Zustand eines Speichermediums läßt sich mit der sog. Magnetisierung M beschreiben. Dabei stellen "+1" und "-1" die möglichen Sättigungswerte der Magnetisierung des Speichermediums dar. Das Verhalten der Magnetisierung M eines Speichermediums als Funktion des von außen angelegten Magnetfeldes H wird durch die sog. Hysteresis-Kurve beschrieben. Die Kenntnis der Form dieser Hysteresis-Kurve ermöglicht zum einen die Bestimmung des sog. Koerzitivfeldes $H_c$, bei dem sich die Magnetisierung von "+1" zu "-1" umschalten läßt und zum anderen die Bestimmung der sog. Remaneszenz als die bleibende Magnetisierung beim Magnetfeld H = 0. Da zur Erzielung einer maximalen Speicherdichte des Mediums der Wert $H_c$ zu optimieren ist und zudem die Größe der Bezirke, die unabhängig voneinander die magnetischen Zustände "+1" oder "-1" annehmen können, zu minimieren sind, stellt die Kenntnis der Hysteresis-Kurve damit eine Qualitätskontrolle hinsichtlich der Herstellung des Speichermediums dar.

Als Stand der Technik sind Verfahren zum Auslesen magnetisch gespeicherter Informationen bekannt, die auf den sog. magnetooptischen Kerr-Effekt basieren. Bei diesem Effekt wird die Intensität als auch die Polarisation des Lichtes eines von einer Probe reflektierten bzw. transmittierten Lichtstrahls vom magnetischen Zustand der Probe beeinflußt. Dabei begründet physikalisch ein elementarer optischer Prozeß, wie z. B. die Reflektion, daß man mit Hilfe des Kerr-Effekts Auskunft über die Magnetisierung M des Speichermediums bekommen kann.

Die als Stand der Technik bekannten Verfahren und Vorrichtungen zum Lesen von magnetisch gespeicherter Information zeigen einen sehr komplizierten und umfangreichen Aufbau.

Aus DE-PS 29 53 304 (Spalte 1, Zeilen 17 - 19) ist eine Vorrichtung zum Lesen von magnetisch gespeicherter Information bekannt, wobei der von der Lichtquelle abgegebene Lichtstrahl elliptisch polarisiert ist. Aus DE-PS 21 21 510 (Spalte 1, Zeilen 10 -20) ist eine Vorrichtung zum Ablesen binärer Informationsspeicher unter Ausnutzung des Kerr-Effekts bekannt bei der u.a. ein metallischer Spiegel im Wege des Lichtbündels von der Speicherschicht angeordnet ist, der aus einem ferromagnetischen Metall besteht. Außerdem ist eine Anordnung vorgesehen, die das ferromagnetische Metall des Spiegels in wenigstens eine der Magnetisierungsrichtungen, die einen Wert einer Binärziffer in der Speicherschicht entsprechen, in die magnetische Sättigung bringen kann.

Die als Stand der Technik bekannten Verfahren sind nicht nur sehr kompliziert und umfangreich, sondern zeigen darüber hinaus auch den Nachteil, nicht die notwendige Empfindlichkeit hinsichtlich der Bestimmung der Hysteresis-Kurve eines Speichermediums zu besitzen, insbesondere dann, wenn es sich um dünne Schichten im Bereich bis zu $10^{-10}$ m (eine sog. Monolage) handelt.

Es ist daher Aufgabe der Erfindung, ein Verfahren zum Auslesen magnetisch, insbesondere binär gespeicherter Informationen zu entwickeln, das einfach, kompakt und höchst empfindlich ist und insbesondere die Charakterisierung von Speicherschichten mit Schichtdicken bis zu Monolagen erlaubt. Zudem ist es Aufgabe der Erfindung, eine entsprechende Vorrichtung zur Durchführung dieses Verfahren zu entwickeln.

Die erfindungsgemäße Aufgabe wird durch ein Verfahren gemäß den kennzeichnenden Merkmalen des Anspruchs 1 gelöst.

Bei diesem Verfahren werden die gespeicherten Informationen des Speichermediums genutzt, die senkrecht zur Reflektionsebene stehen. Außerdem wird das durch den vom Speichermedium kommenden Lichtstrahl erzeugte, elektrische Signal $V_M$ des Detektors um einen festen Wert $V_O$ zu einem reduzierten Signal $V_M - V_O$ verringert. Dabei hängt der Wert $V_O$ von der Empfindlichkeit der nachgeschalteten Einrichtung bzw. von dem Auflösungsvermögen der Vorrichtung ab. Das reduzierte Signal erfaßt dann ohne Weiteres die in der senkrecht zur Reflektionsebene im Speichermedium enthaltenen Information und wird nach Verstärkung entsprechend weiterverarbeitet. Unter Zuhilfenahme der in diesem Meßverfahren benutzten sog. transversalen Geometrie des magnetooptischen Kerr-Effekts, erfaßt das reduzierte Signal vollständig den magnetischen Zustand der Probe am Ort des Strahlflecks, sofern es die Magnetisierungskomponente in der Probe betrifft, die senkrecht zur, von der einfallenden und dem reflektierten Lichtstrahl enthaltenen Reflektionsebene betrifft. Im Gegensatz zum Stand der Technik bedarf es keine weiteren Verfahrensschritte die Hysteresis der Speichermediums mit höchster Empfindlichkeit zu erhalten.

Die z. B. durch Änderung des Magnetfeldes H bewirkte Änderung des magnetischen Zustandes M des Speichermediums zeigt eine Variation der von der Probe kommenden Intensität und somit des elektrischen Sig nals $V_M$, die sehr klein ist. Dieses meßtechnische Problem - im Falle des Einsatzes einer Monolage als Speichermedium ist $(V_M - V_O) / V_O$ ungefähr $10^{-4}$ -wird überraschend einfach gelöst durch eine elektronische Kompensationsmethode, bei der $V_M$ um einen festen Wert $V_O$ verringert und anschließend geeignet verstärkt wird.

Der Wert $V_O$ soll dabei so gewählt werden, daß die aufgrund der Variation des Magnetfeldes H erreichte Schwankung im elektrischen Signal $V_M$ erfaßt wird.

Es ist zweckmäßig den festen Wert $V_O$ innerhalb eines Toleranzbereiches $V_T$ als Mittelwert der möglichen Extremalschwankungen des Signals $V_M$ einzustellen. Dabei sind diese Extremalschwankungen in $V_M$ eine Folge der unterschiedlich magnetischen Zustände bzw. magnetisierten Bereiche des Speichermediums, die zu Änderungen in der von dem Speichermedium kommenden Lichtintensität führen können.

Der Toleranzbereich $V_T$ des Wertes $V_O$ ist durch die Bedingung

$$\frac{V_T}{V_O} < \frac{A}{V_S} \cdot \frac{(V_M - V_O)}{V_O}$$

gegeben. Dabei sind das maximale Arbeitssignal der Elektronik mit A und die gewünschte Signalspannung mit $V_S$ bezeichnet.

Eine sehr vorteilhafte Variante des erfindungsgemäßen Verfahrens liegt darin, ein Speichermedium zu verwenden, bei dem die sämtlich in ihm enthaltenen magnetischen Informationen eine ausgezeichnete Orientierung oder die dazu entgegengesetzte Orientierung besitzen. Dabei ist es zweckmäßig, die Positionie rung des Speichermediums so zu wählen, daß die ausgezeichnete Orientierung sowohl senkrecht zum einfallenden als auch senkrecht zu dem von dem Speichermedium kommenden Lichtstrahl steht. Zu dieser Klasse von Speichermedien gehören die in der elektronischen Datenverarbeitung eingesetzten binären Speichersysteme, bei dem die magnetischen Informationen in Teilbereiche des magnetischen Schichtsystems gespeichert sind, die eine parallele oder antiparallele Orientierung der Magnetisierung aufweisen. Bei dieser erfindungsgemäßen Verfahrensvariante wird durch die gezielte Positionierung das Auslesen sämtlicher im Speichermedium enthaltener Informationen erreicht.

Es ist zweckmäßig, ein schichtförmiges Speichermedium zu verwenden, das aus ferromagnetischem oder ferroelektrischem Material besteht und eine Schichtdicke im Bereich von wenigstens einigen $10^{-10}$ m bis zu $0,5 \times 10^{-6}$ m aufweist. Vorteile können sich durch den Einsatz von Speichermedien, die eine Schichtdicke im Bereich einer Monolage aufweisen, ergeben, wenn eine Speicherung von Informationen auf engstem Raum erforderlich ist.

Bei einer besonders vorteilhaften Variante des beanspruchten Verfahrens wird ein Polarisator verwendet, der im wesentlichen die Komponente des von dem Speichermedium kommenden lichtstrahls absorbiert, die keinen Beitrag zur Bestimmung der in dem Speichermedium enthaltenen magnetischen Information liefert. Dazu wird der Polarisator zwischen dem Speichermedium und dem Detektor auf dem optischen Weg des von dem Speichermedium kommenden Lichtstrahls entsprechend positioniert. Bei dieser Variante des beanspruchten Verfahrens wird die Kompensationsmethode mit dem Konzept einer selektiven Abschwächung erweitert. Durch den Einsatz eines - linearen - Polarisators wird eine Abschwächung der Komponente des von dem Speichermedium kommenden Lichtstrahls erreicht, die nicht beiträgt zu einer von der Magnetisierung M verursachten Änderung der Lichtintensität.

Es ist zweckmäßig, als Lichtstrahl, der auf das Speichermedium auftritt, ein linear polarisierter Lichtstrahl zu verwenden. Unter dieser Bedingung ergibt sich eine besonders zweckmäßige und vorteilhafte Abwandlung des erfindungsgemäßen Verfahrens durch eine gezielte und bestimmte Orientierung der Polarisation des einfallenden Lichtstrahls, nämlich dann wenn der Polarisationsvektor des einfallenden linearen polarisierten Lichtstrahls mit der Reflektionsebene einen Winkel zwischen $40°$ und $50°$, insbesondere einen Winkel von $45°$, bildet.

Die erfindungsgemäße Aufgabe wird ferner gelöst durch eine Vorrichtung gemäß dem Kennzeichnungsteil des Anspruchs 9.

Weitere zweckmäßige und/oder vorteilhafte Ausführungsarten der beanspruchten Vorrichtung sind in den Kennzeichnungsteilen der Ansprüche 10, 11 bzw. 12 beschrieben.

Es wird klargestellt, daß die in dieser Beschreibung erwähnte Magnetisierung M und das äußere Magnetfeld H sich auf ein Speichermedium aus ferromagnetischem Material beziehen. Sofern ein Speichermedium aus einem ferroelektrischen Material zum Einsatz kommt gelten die bisherigen Ausführungen entsprechend, vorausgesetzt daß man dann selbstverständlich M als die elektrische Polarisation und H als das von außen angelegte elektrische Feld auffaßt.

Es zeigen:

Figur 1: Vorrichtung zum Auslesen magnetisch gespeicherter Informationen in einer Reflektionsanordnung

Figur 2: Blockschema der Meßelektronik

Figur 3: Extremalschwankungen im Vergleich

Figur 4: M = M(H) für eine Monolage aus Cobalt auf einer Cu (100)-Oberfläche

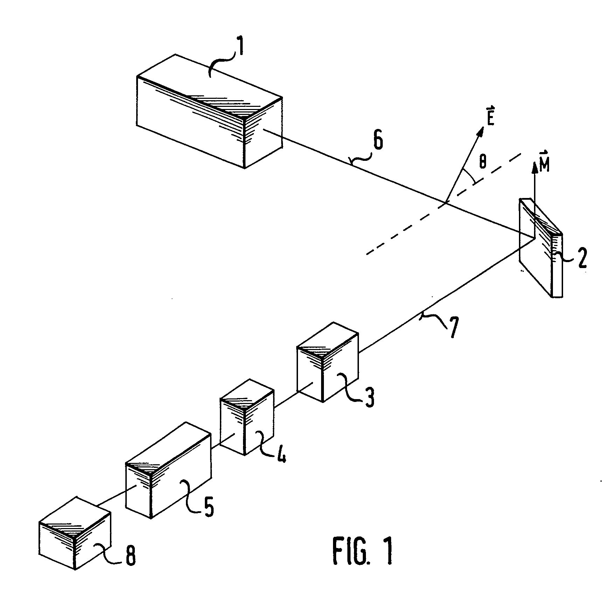

Die in Figur 1 dargestellte Vorrichtung zum Auslesen magnetisch gespeicherter Informationen besteht aus einem Laser 1, dem magnetooptischen Speichermedium 2, dem Polarisator 3, einem Absorber 4 sowie der Photodiode 5. Es wurde mit dieser Vorrichtung zur Durchführung des Verfahrens die sog. transversale Geometrie des magnetooptischen Kerreffekts gewählt, wobei der vom Laser 1 kommende Lichtstrahl 6 auf das Speichermedium 2 auftrifft und als reflektierter Lichtstrahl 7 durch den Polarisator 3 und den Absorber 4 auf die Photodiode 5 auftrifft.

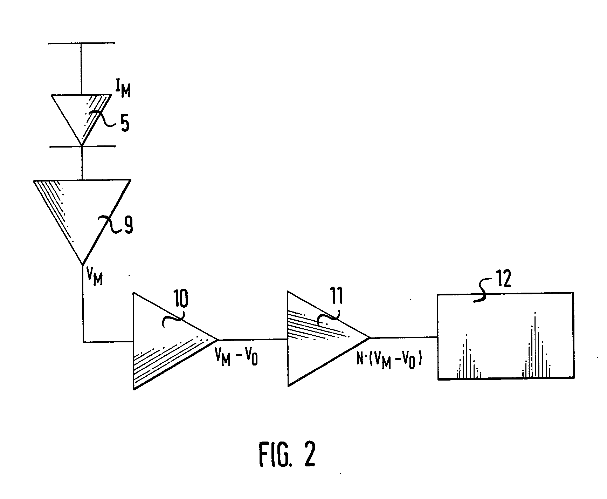

In Figur 2 ist die der Photodiode 5 nachgeschaltete elektronische Schaltung 8 zur Weiterverarbeitung der von der Photodiode 5 in das elektrische Signal $V_M$ umgewandelten Intensität des reflektierten Lichtes dargestellt. Das von der Photodiode 5 erzeugte elektrische Signal $V_M$ wird nach Vorverstärkung mit Hilfe des Vorverstärkers 9 am Kompensator 10 um den Wert $V_O$ verringert. Das reduzierte Signal $V_M - V_O$ wird vom Verstärker 11 um den Faktor N verstärkt und in das Datenerfassungssystem 12 gegeben.

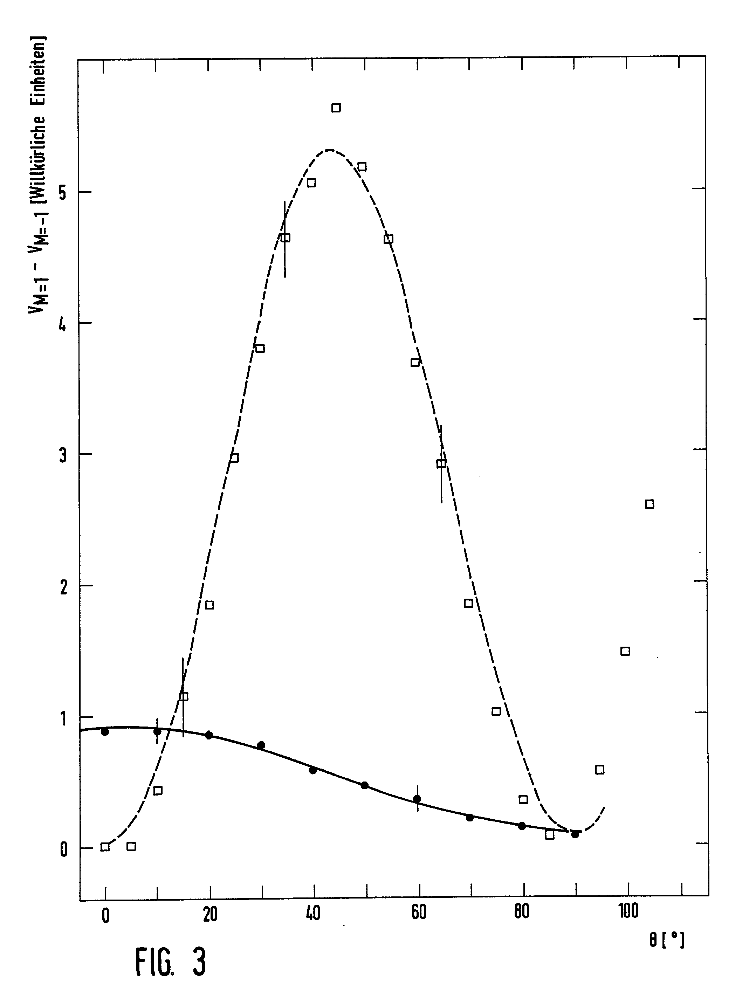

Figur 3 zeigt die Extremalschwankungen im Vergleich. Dazu wurde das Signal $V_{M=1} - V_{M=-1}$ als Funktion des Winkels $\Theta$, der durch den Polarisationsvektor $\vec{E}$ des vom Laser 1 kommenden einfallenden Lichtstrahls 6 mit der Reflexionsebene gebildet wird, mit der Vorrichtung sowohl ohne Polarisator 3 (als Kreise dargestellt) als auch mit Polarisator 3 (als Vierecke dargestellt) gemessen. Die mit Kreisen angegebenen Meßpunkte sind die Mittelung aus 20 M(H)-Durchläufen. Für die mit Vierecken angegebenen Meßpunkte genügte ein einziger Durchlauf.

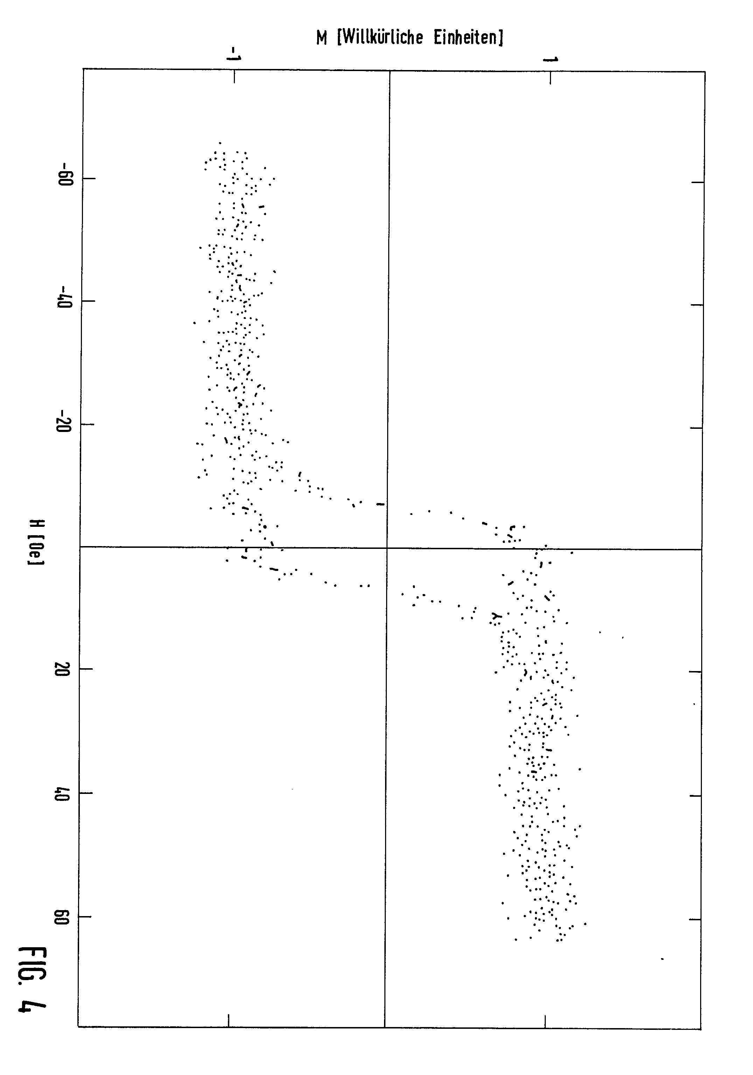

Schließlich zeigt die Figur 4 für eine Monolage aus Cobalt auf einer Cu(100)-Oberfläche die gemessene Magnetisierung M = M(H). Zur Vermeidung einer Kontaminierung während der Messungen in Luft wurde die Co-Schicht mit etwa $5 \times 10^{-9}$ m Cu bedeckt. Die dargestellten Meßpunkte sind Mittelungen aus zwanzig vollständigen M(H)-Durchläufen. Die Dauer zur Bestimmung eines M(H)-Durchlaufes betrug etwa 0,5 sec.

## Ansprüche

1. Verfahren zum Auslesen magnetisch, insbesondere binär gespeicherter Informationen eines magnetooptischen oder optoelektronischen Speichermediums (2), bei dem

a) ein Lichtstrahl (6) auf das Speichermedium auftrifft und entweder reflektiert oder transmittiert wird

b) der von dem Speichermedium kommende Lichtstrahl (7) auf einen lichtelektrischen Detektor (5) insbesondere eine Photodiode trifft und in ein elektrisches Signal $V_M$ umgewandelt wird,

c) das elektrische Signal von einer elektronischen Schaltung (8) mit Hilfe eines Vorverstärkers (9), eines Kompensators (10), eines Verstärkers (11) und eines Datenerfassungssystems (12) weiterverarbeitet wird,

**dadurch gekennzeichnet,**

daß

d) die in der zu der Reflexionsebene senkrecht gespeicherten Informationen des Speichermediums (2) genutzt werden und

e) das elektrische Signal $V_M$ des Detektors (5) in Abhängigkeit von der Empfindlichkeit der nachgeschalteten Einrichtung zur Erfassung der gespeicherten Information um einen festen Wert $V_O$ zu einem reduzierten Signal $V_M - V_O$ verringert wird, wobei anschließend das Signal $V_M - V_O$ elektronisch verstärkt wird.

2. Verfahren nach Anspruch 1,
**dadurch gekennzeichnet,**
daß der feste Wert $V_O$ innerhalb eines Toleranzbereichs $V_T$ als Mittelwert der Extremalschwankungen des elektrischen Signals $V_M$ aufgrund der Schwankungen in der von dem Speichermedium (2) kommenden Lichtintensität als Folge der unterschiedlich magnetisierten Bereiche des Speichermediums (2) erhalten und in die elektronische Schaltung (8) fest gespeichert wird.

3. Verfahren nach Anspruch 2,
**dadurch gekennzeichnet,**
daß der Toleranzbereich $V_T$ des Wertes $V_O$ unter Berücksichtigung des maximalen Arbeitssignals A der Elektronik und der gewünschten Signalspannung $V_S$ durch die Bedingung

$$\frac{V_T}{V_0} < \frac{A}{V_S} \cdot \frac{(V_M - V_0)}{V_0}$$

gegeben ist.

4. Verfahren nach einem der Ansprüche 1 bis 3,

**dadurch gekennzeichnet,**

daß ein Speichermedium (2) verwendet wird, bei dem

a) die sämtlich in ihm enthaltenen magnetischen Informationen eine ausgezeichnete Orientierung oder die dazu entgegengesetzte Orientierung besitzen und

b) die Positionierung des Speichermediums so gewählt wird, daß diese ausgezeichnete Orientierung sowohl senkrecht zum einfallenden (6) als auch senkrecht zu dem von dem Speichermedium kommenden Lichtstrahl (7) steht.

5. Verfahren nach einem der Ansprüche 1 bis 4,

**dadurch gekennzeichnet,**

daß ein schichtförmiges, aus ferromagnetischem oder ferroelektrischem Material bestehndes Speichermedium (2) mit einer Schichtdicke von wenigstens einigen $10^{-10}$ m bis zu $0{,}5 \times 10^{-6}$ m, insbesondere einer Schichtdicke im Bereich einer Monolage, verwendet wird.

6. Verfahren nach einem der vorhergehenden Ansprüche,

**dadurch gekennzeichnet,**

daß ein Polarisator (3) verwendet wird, der zwischen dem Speichermedium (2) und dem Detektor (5) auf dem optischen Weg des von dem Speichermedium kommenden Lichtstrahls (7) so positioniert wird, daß im wesentlichen die Komponente des von dem Speichermedium kommenden Lichtstrahls, die keinen Beitrag zur Bestimmung der in dem Speichermedium enthaltenen magnetische Information liefert, absorbiert wird.

7. Verfahren nach einem der vorhergehenden Ansprüche,

**dadurch gekennzeichnet,**

daß als Lichtstrahl (6), der auf das Speichermedium (2) auftrifft, ein linear polarisierter Lichtstrahl verwendet wird.

8. Verfahren nach Anspruch 7,

**dadurch gekennzeichnet,**

daß die Orientierung der Polarisation des einfallenden Lichtstrahls (6) so gewählt wird, daß der Polarisationsvektor des einfallenden linear polarisierten Lichtstrahls mit der vom einfallenden Lichtstrahl und vom Speichermedium (2) kommenden Lichtstrahl (7) aufgespannten Ebene einen Winkel zwischen 40° und 50°, insbesondere einen Winkel von 45°, bildet.

9. Vorrichtung zum Auslesen magnetisch gespeicherter Informationen mit

a) einer Lichtquelle (1),

b) einem magnetooptischen oder optoelektronischen Speichermedium (2),

c) einem lichtelektrischen Detektor (5) und

d) einer elektronischen Schaltung (8), mit

d1) einem Vorverstärker (9),

d2) einem Kompensator (10),

d3) einem Verstärker (11) und

d4) einem Datenerfassungssystem (12)

zur Durchführung des Verfahrens nach einem der Ansprüche 1 bis 3,

**dadurch gekennzeichnet,**

daß

e) die in der zu der Reflektionsebene senkrecht gespeicherten Informationen des Speichermediums (2) genutzt werden und

f) die elektronische Schaltung (8) vorgesehen ist, die das elektrische Signal $V_M$ des lichtelektrischen Detektors (5) um einen festen Wert $V_O$ verringert.

10. Vorrichtung nach Anspruch 9,

**dadurch gekennzeichnet,**

daß das Speichermedium (2) aus schichtförmigem, insbesondere ferromagnetischem oder ferroelektrischem Material mit einer Schichtdicke von wenigstens einigen $10^{-10}$ m bis zu $0{,}5 \times 10^{-6}$ m, insbesondere einer Schichtdicke im Bereich einer Monolage, besteht.

11. Vorrichtung zum Auslesen magnetisch gespeicherter Informationen mit

a) einer Lichtquelle (1),

b) einem magnetooptischen oder optoelektronischen Speichermedium (2),

c) einem lichtelektrischen Detektor (5) und

d) einer elektronischen Schaltung (8), mit

d1) einem Vorverstärker (9),

d2) einem Kompensator (10),

d3) einem Verstärker (11) und

d4) einem Datenerfassungssystem (12)

zur Durchführung des Verfahrens nach einem der Ansprüche 1 bis 3

**dadurch gekennzeichnet,**

daß

e) die Nutzung der in der zu der Reflektionsebene senkrecht gespeicherten Informationen des Speichermediums (2) vorgesehen ist und

f) ein Polarisator (3) zwischen dem Spei chermedium (2) und dem Detektor (5) auf dem optischen Weg des von dem Speichermedium kommenden Lichtstrahls (7) so positioniert ist, daß im wesentlichen die Komponente des von dem Speichermedium kommenden Lichtstrahls, die keinen Beitrag zur Bestimmung der in dem Spei chermedium enthaltenen magnetische In formation liefert, absorbiert wird.

12. Vorrichtung nach Anspruch 10,

**dadurch gekennzeichnet,**
daß das Speichermedium (2) aus schichtförmigem, insbesondere ferromagnetischem oder ferroelektrischem Material mit einer Schichtdicke von wenigstens einigen $10^{-10}$ m bis zu $0,5 \times 10^{-6}$ m, insbesondere einer Schichtdicke im Bereich einer Monolage, besteht.

FIG. 1

FIG. 2

FIG. 3

M [Willkürliche Einheiten]

H [Oe]

FIG. 4